# EUROPEAN PATENT APPLICATION

(11) **EP 4 404 305 A1**
(43) Date of publication of application: **24.07.2024**
(21) Application number: 22867078.2
(22) Date of filing: 12.07.2022
(51) Int. Cl.: H01M 4/62, C01B 25/14, C01G 23/00, H01B 1/06, H01M 4/13, H01M 4/36

(54) **POSITIVE ELECTRODE MATERIAL, POSITIVE ELECTRODE, AND BATTERY**

(30) Priority: 13.09.2021 JP 2021148668
(71) Applicant: Panasonic Intellectual Property Management Co., Ltd., Kadoma-shi, Osaka 571-0057 (JP)
(72) Inventor: SUGIMOTO, Yuta, Kadoma-shi, Osaka 571-0057 (JP); HASHIMOTO, Kazuya, Kadoma-shi, Osaka 571-0057 (JP)
(74) Representative: Grünecker Patent- und Rechtsanwälte PartG mbB
(86) International application number: PCT/JP2022/027349
(87) International publication number: WO 2023/037756

(57) **Abstract**

A positive electrode material 10 includes a positive electrode active material 100, a first solid electrolyte 101, and a second solid electrolyte 102. The first solid electrolyte contains Li, Ti, M, and X, where M is at least one selected from the group consisting of metalloid elements and metal elements other than Li or Ti, and X is at least one selected from the group consisting of F, Cl, Br, and I. A ratio of a volume of the first solid electrolyte 101 to a total volume of the first solid electrolyte 101 and the second solid electrolyte 102 is greater than or equal to 4% and less than or equal to 50%.

## Description

### Technical Field

The present disclosure relates to a positive electrode material, a positive electrode, and a battery.

### Background Art

Patent Literature 1 discloses a method for producing a composite active material. The method includes coating a positive electrode active material with an oxide solid electrolyte and, further, with a sulfide solid electrolyte.

### Citation List

### Patent Literature

PTL 1: Japanese Unexamined Patent Application Publication No. 2016-18735

### Summary of Invention

In the related art, there is a need for improving the safety of a battery.

The present disclosure provides a positive electrode material including a positive electrode active material, a first solid electrolyte, and a second solid electrolyte. The first solid electrolyte contains Li, Ti, M, and X, where M is at least one selected from the group consisting of metalloid elements and metal elements other than Li or Ti, and X is at least one selected from the group consisting of F, Cl, Br, and I. A ratio of a volume of the first solid electrolyte to a total volume of the first solid electrolyte and the second solid electrolyte is greater than or equal to 4% and less than or equal to 50%.

With the present disclosure, the safety of a battery can be improved.

### Brief Description of Drawings

[Fig. 1] Fig. 1 is a cross-sectional view illustrating a schematic configuration of a positive electrode material according to a first embodiment.
[Fig. 2] Fig. 2 is a cross-sectional view illustrating a schematic configuration of a positive electrode material according to a modification.
[Fig. 3] Fig. 3 is a cross-sectional view illustrating a schematic configuration of a battery according to a second embodiment.

### Description of Embodiments

### (Underlying Knowledge Forming Basis of the Present Disclosure)

Batteries that use a solid electrolyte are generally considered to be safe; however, this is not always true. For example, when a battery that uses a solid electrolyte is repeatedly charged and discharged, oxygen may be evolved from a positive electrode active material. The oxygen that has been evolved oxidizes the solid electrolyte and increases a temperature of the battery. As a result, a casing holding the battery may suffer deterioration or damage, and a malfunction of the battery may be caused. Accordingly, there is a need for a technology suitable for inhibiting heat generation in a battery that uses a solid electrolyte.

### (Overview of Aspects of the Present Disclosure)

According to a first aspect of the present disclosure, a positive electrode material includes
a positive electrode active material;
a first solid electrolyte; and
a second solid electrolyte, in which
the first solid electrolyte contains Li, Ti, M, and X, where M is at least one selected from the group consisting of metalloid elements and metal elements other than Li or Ti, and X is at least one selected from the group consisting of F, Cl, Br, and I, and
a ratio of a volume of the first solid electrolyte to a total volume of the first solid electrolyte and the second solid electrolyte is greater than or equal to 4% and less than or equal to 50%.

With the positive electrode material of the first aspect, heat generation in a battery is inhibited, and, consequently, the safety of the battery can be improved.

In a second aspect of the present disclosure, the positive electrode material according to the first aspect may be one in which, for example, the ratio is greater than or equal to 4.8%. With this configuration, heat generation in a battery is further inhibited.

In a third aspect of the present disclosure, the positive electrode material according to the first or second aspect may be one in which, for example, the ratio is less than or equal to 45%. With this configuration, heat generation in a battery is further inhibited.

In a fourth aspect of the present disclosure, the positive electrode material according to any one of the first to third aspects may be one in which, for example, the ratio is less than or equal to 41.2%. With this configuration, heat generation in a battery is further inhibited.

In a fifth aspect of the present disclosure, the positive electrode material according to any one of the first to fourth aspects may be one in which, for example, the second solid electrolyte contains Li and S. Sulfide solid electrolytes have high ionic conductivity and, therefore, can improve charge-discharge efficiency of a battery. On the other hand, sulfide solid electrolytes exhibit poor oxidation resistance in some cases. In the instance where the second solid electrolyte that is included in a battery includes a sulfide solid electrolyte, the application of the technology of the present disclosure can produce a superior effect in improving the safety of the battery.

In a sixth aspect of the present disclosure, the positive electrode material according to any one of the first to fifth aspects may be one in which, for example, M includes at least one selected from the group consisting of Ca, Mg, Al, Y, and Zr. In the instance where M includes at least one element selected from the group consisting of Ca, Mg, Al, Y, and Zr, a halide solid electrolyte exhibits high ionic conductivity.

In a seventh aspect of the present disclosure, the positive electrode material according to any one of the first to sixth aspects may be one in which, for example, M includes aluminum. In the instance where M includes Al, a halide solid electrolyte exhibits high ionic conductivity.

In an eighth aspect of the present disclosure, the positive electrode material according to any one of the first to seventh aspects may be one in which, for example, the first solid electrolyte is represented by Formula 1, shown below, in which α, β, γ, and δ are each independently a value greater than 0. In the instance where a halide solid electrolyte represented by Formula 1 is used in a battery, the charge-discharge efficiency of the battery can be improved.

Li_{α}Ti_{β}M_{γ}X_{δ} (Formula 1)

In a ninth aspect of the present disclosure, the positive electrode material according to any one of the first to eighth aspects may be one that, for example, further includes a coating layer coating at least a portion of a surface of the positive electrode active material. With this configuration, the charge-discharge efficiency of a battery can be improved.

In a tenth aspect of the present disclosure, the positive electrode material according to the ninth aspect may be one in which, for example, the coating layer contains an oxide solid electrolyte having lithium ion conductivity. In the instance where an oxide solid electrolyte is used in the coating layer, the charge-discharge efficiency of a battery can be further improved.

In an eleventh aspect of the present disclosure, the positive electrode material according to the ninth or tenth aspect may be one in which, for example, the coating layer contains lithium niobate. With this configuration, the charge-discharge efficiency of a battery can be further improved.

According to a twelfth aspect of the present disclosure, a positive electrode includes the positive electrode material according to any one of the first to eleventh aspects. With this configuration, heat generation in a battery is inhibited, and, consequently, the safety of the battery can be improved.

According to a thirteenth aspect of the present disclosure, a battery includes the positive electrode of the twelfth aspect. With the present disclosure, heat generation in the battery is inhibited, and, consequently, the safety of the battery can be improved.

Embodiments of the present disclosure will be described below with reference to the drawings. The present disclosure is not limited to the embodiments described below.

### (First Embodiment)

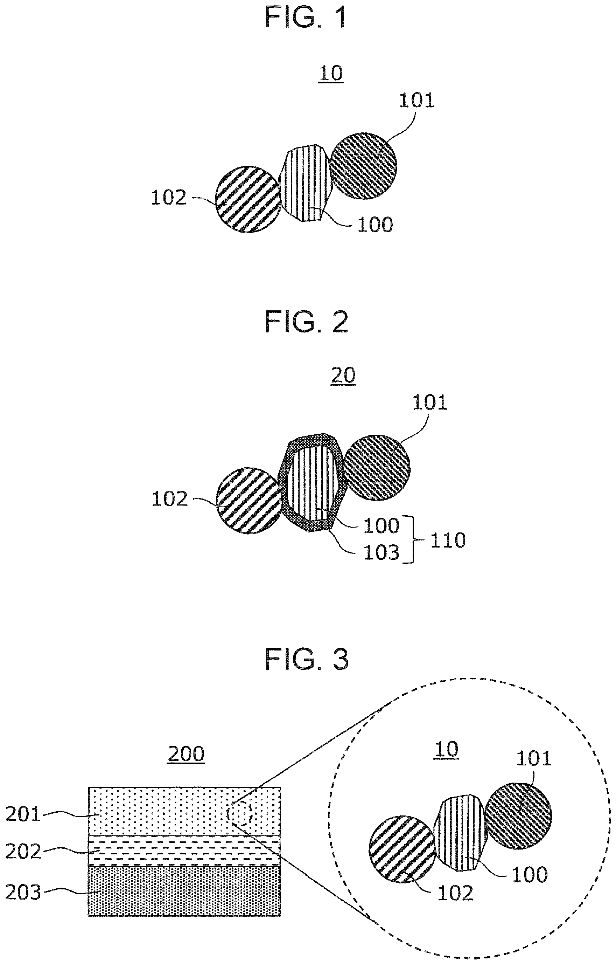

Fig. 1 is a cross-sectional view illustrating a schematic configuration of a positive electrode material according to a first embodiment. A positive electrode material 10 includes a positive electrode active material 100, a first solid electrolyte 101, and a second solid electrolyte 102.

The first solid electrolyte 101 contains Li, Ti, M, and X. M is at least one selected from the group consisting of metalloid elements and metal elements other than Li or Ti. X is at least one selected from the group consisting of F, Cl, Br, and I. In the positive electrode material 10, a ratio V1/Vt, which is a ratio of V1 to Vt, is greater than or equal to 4% and less than or equal to 50%, as expressed in a percentage, where V1 is a volume of the first solid electrolyte, and Vt is a total volume of the first solid electrolyte 101 and the second solid electrolyte 102.

The metalloid elements include B, Si, Ge, As, Sb, and Te.

The metal elements include all the elements other than hydrogen from Groups 1 to 12 of the periodic table and all the elements other than B, Si, Ge, As, Sb, Te, C, N, P, O, S, or Se from Groups 13 to 16. That is, the metal elements are elements that can become a cation in instances in which any of the elements forms an inorganic compound with a halogen element.

The first solid electrolyte 101 may be a solid electrolyte containing a halogen, that is, a so-called halide solid electrolyte. Halide solid electrolytes have excellent oxidation resistance. Accordingly, the presence of the first solid electrolyte 101 in the positive electrode material 10 can inhibit oxidation of the second solid electrolyte 102. Consequently, heat generation in a battery that uses the positive electrode material 10 can be inhibited, and as a result, the safety of the battery that uses the positive electrode material 10 can be improved.

If the ratio V1/Vt is excessively low, an oxidation reaction between the positive electrode active material 100 and the second solid electrolyte 102 may not be sufficiently inhibited by the first solid electrolyte 101, and, consequently, the above-described effect may not be sufficiently produced. If the ratio V1/Vt is excessively high, concerns arise that the positive electrode material 10 may have insufficient electron conductivity and that the positive electrode material 10 may have insufficient ionic conductivity. The ratio V1/Vt may be greater than or equal to 4.8%. The ratio V1/Vt may be less than or equal to 45% or less than or equal to 41.2%.

The total volume Vt of the first solid electrolyte 101 and the second solid electrolyte 102 is a sum of the volume V1 of the first solid electrolyte 101 and a volume V2 of the second solid electrolyte 102. The volume V1 of the first solid electrolyte 101 is a total volume of the first solid electrolyte 101 in a powder of the positive electrode material 10. The volume V2 of the second solid electrolyte 102 is a total volume of the second solid electrolyte 102 in the powder of the positive electrode material 10. That is, the ratio V1/Vt is a value determined based on an entirety of a specific amount of the powder of the positive electrode material 10.

The ratio V1/Vt can be calculated from amounts of charge of the materials or can be calculated in the following manner. Specifically, a cross section of a positive electrode that uses the positive electrode material 10 is examined with a scanning electron microscope (SEM-EDX), and two-dimensional elemental mapping images are acquired. Measurement conditions for the scanning electron microscope used to acquire the two-dimensional mapping images include, for example, a magnification of 1000× to 3000× and an acceleration voltage of 5 kV. The two-dimensional mapping images are acquired at a resolution of 1280×960. The volume of the positive electrode active material 100, the volume V1 of the first solid electrolyte 101, and the volume V2 of the second solid electrolyte 102 can be determined by analyzing the two-dimensional elemental mapping images and using the number of pixels corresponding to the elements present in the positive electrode active material 100, the first solid electrolyte 101, and the second solid electrolyte 102.

A ratio of the volume of the first solid electrolyte 101 to the volume of the positive electrode active material 100 is, for example, greater than or equal to 2% and less than or equal to 17%. In the instance where the ratio is appropriately adjusted, a reaction between the solid electrolyte and oxygen released from the positive electrode active material can be inhibited. The ratio may be greater than or equal to 3% and less than or equal to 7%.

In the positive electrode material 10, the first solid electrolyte 101 and the positive electrode active material 100 may be in contact with each other. In the positive electrode material 10, the second solid electrolyte 102 and the positive electrode active material 100 may be in contact with each other. In the positive electrode material 10, the first solid electrolyte 101 and the second solid electrolyte 102 may be in contact with each other. The positive electrode material 10 may include a plurality of particles of the positive electrode active material 100. The positive electrode material 10 may include a plurality of particles of the first solid electrolyte 101 and a plurality of particles of the second solid electrolyte 102. The positive electrode material 10 may be a mixture of a plurality of particles of the positive electrode active material 100, a plurality of particles of the first solid electrolyte 101, and a plurality of particles of the second solid electrolyte 102.

In the positive electrode material 10, a ratio "v1:(100 - v1)", which is a ratio between a volume of the positive electrode active material 100 and a volume of the solid electrolytes, may satisfy 30 ≤ v1 ≤ 95. When 30 ≤ v1 is satisfied, a sufficient energy density of a battery is ensured. When v1 ≤ 95 is satisfied, a high-power operation of a battery can be achieved. The volume of the solid electrolytes is the total volume of the first solid electrolyte 101 and the second solid electrolyte 102.

### <Positive Electrode Active Material>

The positive electrode active material 100 includes a material that has a property of occluding and releasing metal ions (e.g., lithium ions). Examples of the positive electrode active material 100 include lithium transition metal oxides, transition metal fluorides, polyanionic materials, fluorinated polyanionic materials, transition metal sulfides, transition metal oxysulfides, and transition metal oxynitrides. In particular, in instances where a lithium transition metal oxide is used as the positive electrode active material 100, the cost of production of a battery can be reduced, and an average discharge voltage can be increased. Examples of the lithium transition metal oxides include Li(Ni,Co,Al)O₂, Li(Ni,Co,Mn)O₂, and LiCoO₂.

The positive electrode active material 100 has a shape of particles, for example. The shape of the particles of the positive electrode active material 100 is not particularly limited. The shape of the particles of the positive electrode active material 100 may be a spherical shape, an ellipsoidal shape, a flake shape, or a fiber shape.

The positive electrode active material 100 may have a median diameter of greater than or equal to 0.1 µm and less than or equal to 100 µm. When the median diameter of the positive electrode active material 100 is greater than or equal to 0.1 µm, the positive electrode active material 100, the first solid electrolyte 101, and the second solid electrolyte 102 can form a favorable state of dispersion in the positive electrode material 10. As a result, charge-discharge characteristics of a battery are improved. When the median diameter of the positive electrode active material 100 is less than or equal to 100 µm, a sufficient lithium diffusion rate is ensured in the positive electrode active material 100. Consequently, a high-power operation of a battery can be achieved.

The median diameter of the positive electrode active material 100 may be greater than the median diameter of the first solid electrolyte 101. In this case, the positive electrode active material 100 and the first solid electrolyte 101 can form a favorable state of dispersion.

The median diameter of the positive electrode active material 100 may be greater than the median diameter of the second solid electrolyte 102. In this case, the positive electrode active material 100 and the second solid electrolyte 102 can form a favorable state of dispersion.

In this specification, the "median diameter" is a particle diameter corresponding to a cumulative volume of 50% in a volume-based particle size distribution. The volume-based particle size distribution is measured, for example, with a laser diffraction analyzer or an image analyzer.

### <First Solid Electrolyte>

The first solid electrolyte 101 has an ionic conductivity. Typically, the ionic conductivity is a lithium ion conductivity. The positive electrode material 10 may contain incidental impurities, such as starting materials used in the synthesis of the first solid electrolyte 101, by-products, and decomposition products. A ratio of a mass of the incidental impurities to a total mass of the first solid electrolyte 101 may be less than or equal to 5%, less than or equal to 3%, less than or equal to 1%, or less than or equal to 0.5%.

The first solid electrolyte 101 is a material containing Li, Ti, M, and X. M and X are as described above. Such materials have excellent ionic conductivity and oxidation resistance. Accordingly, the positive electrode material 10, which includes the first solid electrolyte 101, improves charge-discharge efficiency of a battery and thermal stability of the battery.

M may include at least one selected from the group consisting of Ca, Mg, Al, Y, and Zr. With this configuration, a halide solid electrolyte exhibits high ionic conductivity.

M may include Al (=aluminum). That is, the metal element that is included in the halide solid electrolyte may be Al. In the instance where M includes Al, the halide solid electrolyte exhibits high ionic conductivity.

M may be Al so that the ionic conductivity of the halide solid electrolyte can be further increased.

The halide solid electrolyte that serves as the first solid electrolyte 101 is, for example, represented by Formula 1, shown below. In Formula 1, α, β, γ, and δ are each independently a value greater than 0.

Li_{α}Ti_{β}M_{γ}X_{δ} (Formula 1)

Halide solid electrolytes represented by Formula 1 have higher ionic conductivity than halide solid electrolytes formed only of Li and a halogen element, such as LiI. Accordingly, in instances where a halide solid electrolyte represented by Formula 1 is used in a battery, the charge-discharge characteristics of the battery can be improved.

The halide solid electrolyte may consist essentially of Li, Ti, Al, and X. The expression "the halide solid electrolyte consists essentially of Li, Ti, Al, and X" means that a molar ratio of a sum of the amounts of substance (i.e., a molar fraction) of Li, Ti, Al, and X to a sum of the amounts of substance of all the elements that form the halide solid electrolyte is greater than or equal to 90%. In one example, the molar ratio (i.e., molar fraction) may be greater than or equal to 95%. The halide solid electrolyte may consist only of Li, Ti, Al, and X.

In the halide solid electrolyte, a ratio of the amount of substance of Li to a sum of the amounts of substance of Ti and Al may be greater than or equal to 1.12 and less than or equal to 5.07 so that the ionic conductivity of the first solid electrolyte 101 can be further increased.

The halide solid electrolyte that serves as the first solid electrolyte 101 may be represented by Formula 2, shown below.

Li_{6-(4-x)b}(Ti₁₋ₓAlₓ)_{b}F₆ (Formula 2)

In Formula 2, 0 < x < 1 and 0 < b ≤ 1.5 are satisfied. Halide solid electrolytes having such a composition have high ionic conductivity.

In Formula 2, 0.1 ≤ x ≤ 0.9 may be satisfied so that the ionic conductivity of the halide solid electrolyte can be further increased.

In Formula 2, 0.1 ≤ x ≤ 0.7 may be satisfied.

In Formula 2, the upper limit and the lower limit of the range of x may be defined by any combination of values selected from 0.1, 0.3, 0.4, 0.5, 0.6, 0.67, 0.7, 0.8, and 0.9.

In Formula 2, 0.8 ≤ b ≤ 1.2 may be satisfied so that the ionic conductivity of the halide solid electrolyte can be increased.

In Formula 2, the upper limit and the lower limit of the range of b may be defined by any combination of values selected from 0.8, 0.9, 0.94, 1.0, 1.06, 1.1, and 1.2.

The halide solid electrolyte may be crystalline or amorphous.

The halide solid electrolyte has a shape that is not limited. Examples of the shape include needle shapes, spherical shapes, and ellipsoidal shapes. The halide solid electrolyte may be particles.

When the shape of the halide solid electrolyte is, for example, a particle shape (e.g., a spherical shape), the halide solid electrolyte may have a median diameter of greater than or equal to 0.01 µm and less than or equal to 100 µm.

The halide solid electrolyte may be a sulfur-free solid electrolyte. In this instance, the formation of a sulfur-containing gas, such as a hydrogen sulfide gas, from the solid electrolyte can be avoided. The "sulfur-free solid electrolyte" is a solid electrolyte that is represented by a formula that does not include the sulfur element. Accordingly, solid electrolytes containing a very small amount of sulfur, for example, solid electrolytes having a sulfur content of less than or equal to 0.1 mass%, are classified into the "sulfur-free solid electrolyte". The halide solid electrolyte may contain an additional anion, in addition to the anion of the halogen element. The additional anion may be that of oxygen.

### <Method for Producing Halide Solid Electrolyte>

The halide solid electrolyte can be produced, for example, in the following manner. Described below is an example of a method for producing a halide solid electrolyte represented by Formula 1.

Raw material powders of halides are provided in accordance with a desired composition. The halides may each be a compound of three elements including a halogen element. For example, in instances where Li_{2.7}Ti_{0.3}Al_{0.7}F₆ is to be prepared, raw material powders of LiF, TiF₄, and AlF₃ are to be provided in a molar ratio of approximately 2.7:0.3:0.7. In this instance, the elemental species of M and X in Formula 1 can be determined by appropriate selection of the types of the raw material powders. The values of α, β, γ, and δ in Formula 1 can be adjusted by adjusting the types of the raw material powders, a compounding ratio between the raw material powders, and a synthesis process. The raw material powders may be mixed together in a pre-adjusted molar ratio such that a compositional change that can occur in the synthesis process can be offset.

The raw material powders are mixed and ground together, and subsequently, the raw material powders are reacted with one another with a mechanochemical milling method, to produce a reaction product. The reaction product may be heat-treated in a vacuum or an inert atmosphere. Alternatively, after the raw material powders are mixed and ground together, the raw material powders may be heat-treated in a vacuum or an inert atmosphere, to produce a reaction product. The heat treatment is performed, for example, at a temperature of greater than or equal to 100°C and less than or equal to 400°C for 1 hour or more. The raw material powders may be heat-treated in a sealed vessel, such as a quartz tube, so that a compositional change that may occur during the heat treatment can be inhibited. Through these steps, the halide solid electrolyte can be prepared.

The constitution of the crystalline phase (i.e., crystal structure) of the halide solid electrolyte can be adjusted and determined by the method with which the raw material powders are reacted with one another and the conditions for the reaction.

### <Second Solid Electrolyte>

The second solid electrolyte 102 may include at least one selected from the group consisting of a halide solid electrolyte, a sulfide solid electrolyte, an oxide solid electrolyte, a polymeric solid electrolyte, and a complex hydride solid electrolyte.

Examples of the halide solid electrolyte include the above-described materials of the first solid electrolyte 101. That is, the second solid electrolyte 102 may have a composition that is the same as or different from the composition of the first solid electrolyte 101.

The oxide solid electrolyte is a solid electrolyte containing oxygen. The oxide solid electrolyte may contain an additional anion, in addition to the oxygen anion. The additional anion may be an anion other than that of sulfur or those of halogen elements.

Examples of the oxide solid electrolyte include NASICON-type solid electrolytes, typified by LiTi₂(PO₄)₃ and element-substituted derivatives thereof; (LaLi)TiO₃-system perovskite-type solid electrolytes; LISICON-type solid electrolytes, typified by Lii₄ZnGe₄O₁₆, Li₄SiO₄, LiGeO₄, and element-substituted derivatives thereof; garnet-type solid electrolytes, typified by Li₇La₃Zr₂O₁₂ and element-substituted derivatives thereof; Li₃PO₄ and N-substituted derivatives thereof; and glass or glass-ceramics including a Li-B-O compound-containing base material and one or more additional materials, in which examples of the Li-B-O compound include LiBO₂ and Li₃BO₃, and examples of the additional materials include Li₂SO₄ and Li₂CO₃.

Examples of the polymeric solid electrolyte include a compound of a polymeric compound and a lithium salt. The polymeric compound may have an ethylene oxide structure. Polymeric compounds having an ethylene oxide structure can contain large amounts of a lithium salt. Accordingly, the ionic conductivity can be further increased. Examples of the lithium salt include LiPF₆, LiBF₄, LiSbF₆, LiAsF₆, LiSO₃CF₃, LiN(SO₂F)₂, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone, or a mixture of two or more lithium salts selected from these may be used.

Examples of the complex hydride solid electrolyte include LiBH₄-LiI and LiBH₄-P₂S₅.

The second solid electrolyte 102 may contain Li and S. In other words, the second solid electrolyte 102 may contain a sulfide solid electrolyte. Sulfide solid electrolytes have high ionic conductivity and, therefore, can improve the charge-discharge efficiency of a battery. On the other hand, sulfide solid electrolytes exhibit poor oxidation resistance in some cases. In the instance where the second solid electrolyte 102 that is included in a battery includes a sulfide solid electrolyte, the application of the technology of the present disclosure can produce a superior effect in improving the safety of the battery.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂. To any of these, LiX, Li₂O, MO_{q}, LiₚMO_{q}, and/or the like may be added. In the LiX, X is at least one selected from the group consisting of F, Cl, Br, and I. In the MO_{q} and LiₚMO_{q}, the element M is at least one selected from the group consisting of P, Si, Ge, B, Al, Ga, In, Fe, and Zn. In the MO_{q} and LiₚMO_{q}, p and q are each independently a natural number.

The second solid electrolyte 102 may include two or more of the above-mentioned materials of solid electrolytes. For example, the second solid electrolyte 102 may include a halide solid electrolyte and a sulfide solid electrolyte.

The second solid electrolyte 102 may have a lithium ion conductivity higher than the lithium ion conductivity of the first solid electrolyte 101.

The second solid electrolyte 102 may contain incidental impurities, such as starting materials used in the synthesis of the second solid electrolyte 102, by-products, and decomposition products. The same applies to the first solid electrolyte 101.

The first solid electrolyte 101 and the second solid electrolyte 102 are solid electrolytes included in the positive electrode material 10. Regarding the solid electrolytes included in the positive electrode material 10, the first solid electrolyte 101 may be present as a major component, or the second solid electrolyte 102 may be present as a major component. The term "major component" refers to a component that is present in the largest amount in terms of a mass ratio. The solid electrolytes of the positive electrode material 10 may include only the first solid electrolyte 101 and the second solid electrolyte 102. The expression "include only the first solid electrolyte 101 and the second solid electrolyte 102" means that no intentionally added materials other than the first solid electrolyte 101 or the second solid electrolyte 102 are present while incidental impurities may be present. Examples of the incidental impurities include raw materials for the first solid electrolyte, raw materials for the second solid electrolyte, by-products that are formed during the preparation of the first solid electrolyte, and by-products that are formed during the preparation of the second solid electrolyte.

### <Other Materials>

A binding agent may be included in the positive electrode material 10 to improve adhesion between particles. The binding agent is used to improve the binding properties of the materials that form the positive electrode. Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polycarbonates, polyether sulfones, polyetherketones, polyetheretherketones, polyphenylene sulfides, hexafluoropolypropylene, styrene butadiene rubber, carboxymethyl cellulose, and ethyl cellulose. The binding agent may be a copolymer of two or more monomers selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid esters, acrylic acids, and hexadiene. One of those mentioned may be used alone, or two or more of those mentioned may be used in combination.

The binding agent may be an elastomer because elastomers have excellent binding properties. Elastomers are polymers having rubber elasticity. The elastomer for use as a binding agent may be a thermoplastic elastomer or a thermosetting elastomer. The binding agent may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubbers (BR), isoprene rubbers (IR), chloroprene rubbers (CR), acrylonitrile-butadiene rubbers (NBR), styrene-butylene rubbers (SBR), styrene-butadiene-styrene (SBS), styrene-isoprene-styrene (SIS), hydrogenated isoprene rubbers (HIR), hydrogenated butyl rubbers (HIIR), hydrogenated nitrile rubbers (HNBR), hydrogenated styrene-butylene rubber (HSBR), polyvinylidene fluoride (PVdF), and polytetrafluoroethylene (PTFE). One of these may be used alone, or two or more of these may be used in combination.

A conductive additive may be included in the positive electrode material 10 to enhance electron conductivity. Examples of the conductive additive include graphites, such as natural graphite and artificial graphite; carbon blacks, such as acetylene black and Ketjen black; conductive fibers, such as carbon fibers and metal fibers; carbon fluoride; metal powders, such as aluminum powders; conductive whiskers, such as zinc oxide whiskers and potassium titanate whiskers; conductive metal oxides, such as titanium oxide; and conductive polymers, such as polyaniline, polypyrrole, and polythiophene. In instances where a conductive carbon additive is used, cost reduction can be achieved.

### <Method for Producing Positive Electrode Material>

The positive electrode material 10 can be prepared by mixing the positive electrode active material 100 with the first solid electrolyte 101 and the second solid electrolyte 102. Methods for mixing the positive electrode active material 100 with the first solid electrolyte 101 and the second solid electrolyte 102 are not particularly limited. The positive electrode active material 100 may be mixed with the first solid electrolyte 101 and the second solid electrolyte 102 in a device, such as a mortar, or the positive electrode active material 100 may be mixed with the first solid electrolyte 101 and the second solid electrolyte 102 in a mixer, such as a ball mill.

### (Modification)

Fig. 2 is a cross-sectional view illustrating a schematic configuration of a positive electrode material 20, according to a modification. The positive electrode material 20 includes a coated active material 110, a first solid electrolyte 101, and a second solid electrolyte 102. The coated active material 110 includes a positive electrode active material 100 and a coating layer 103.

The coating layer 103 is disposed on a surface of the positive electrode active material 100. For example, the coating layer 103 is located between the positive electrode active material 100 and the first solid electrolyte 101 and between the positive electrode active material 100 and the second solid electrolyte 102.

The coating layer 103 coats at least a portion of the surface of the positive electrode active material 100. The coating layer 103 may coat only a portion of the surface of the positive electrode active material 100 or uniformly coat the surface of the positive electrode active material 100. The positive electrode active material 100 and the coating layer 103 constitute a coated active material 110. For example, the first solid electrolyte 101 is in indirect contact with the positive electrode active material 100 with the coating layer 103 disposed between the first solid electrolyte 101 and the positive electrode active material 100. For example, the second solid electrolyte 102 is in indirect contact with the positive electrode active material 100 with the coating layer 103 disposed between the second solid electrolyte 102 and the positive electrode active material 100. For example, the coating layer 103 is in direct contact with the positive electrode active material 100. Coating at least a portion of the surface of the positive electrode active material 100 with the coating layer 103 can improve the charge-discharge efficiency of a battery.

The coating layer 103 may contain a material having low electron conductivity, such as an oxide material or an oxide solid electrolyte.

Examples of the oxide material include SiO₂, Al₂O₃, TiO₂, B₂O₃, Nb₂O₅, WO₃, and ZrO₂. Examples of the oxide solid electrolyte include Li-Nb-O compounds, such as LiNbO₃; Li-B-O compounds, such as LiBO₂ and Li₃BO₃; Li-Al-O compounds, such as LiAlO₂; Li-Si-O compounds, such as Li₄SiO₄; Li₂SO₄; Li-Ti-O compounds, such as Li₄Ti₅O₁₂; Li-Zr-O compounds, such as Li₂ZrO₃; Li-Mo-O compounds, such as Li₂MoO₃; Li-V-O compounds, such as LiV₂O₅; and Li-W-O compounds, such as Li₂WO₄. The oxide material may be one of these or a mixture of two or more of these.

The coating layer 103 may contain a solid electrolyte having lithium ion conductivity. Typically, the coating layer 103 contains an oxide solid electrolyte having lithium ion conductivity. Oxide solid electrolytes have high ionic conductivity and excellent high-potential stability. In the instance where an oxide solid electrolyte is included in the coating layer 103, the charge-discharge efficiency of a battery can be further improved.

The coating layer 103 may be formed of a material containing Nb. Typically, the coating layer 103 includes lithium niobate (LiNbO₃). With this configuration, the charge-discharge efficiency of a battery can be further improved. The oxide solid electrolyte that may be included in the coating layer 103 may be any of the materials described above.

The coating layer 103 has a thickness of, for example, greater than or equal to 1 nm and less than or equal to 500 nm. In the instance where the thickness of the coating layer 103 is appropriately adjusted, contact between the positive electrode active material 100 and the first solid electrolyte 101 and contact between the positive electrode active material 100 and the second solid electrolyte 102 can be sufficiently inhibited.

The thickness of the coating layer 103 can be determined as follows: a thin specimen is prepared from the coated active material 110 with a method such as ion milling, and a cross section of the coated active material 110 is examined with a transmission electron microscope. An average of thicknesses, which may be measured at several random positions (e.g., five points), can be taken as the thickness of the coating layer 103.

### <Method for Producing Coated Active Material>

The coated active material 110 can be produced in the following manner.

First, the coating layer 103 is formed on a surface of the positive electrode active material 100. Methods for forming the coating layer 103 are not particularly limited. Examples of the methods for forming the coating layer 103 include liquid-phase coating methods and vapor-phase coating methods.

For example, a liquid-phase coating method is as follows. A precursor solution containing the materials that form the coating layer 103 is applied to the surface of the positive electrode active material 100. In instances where a coating layer 103 containing LiNbO₃ is to be formed, the precursor solution may be a mixed solution (sol solution) of a solvent, a lithium alkoxide, and a niobium alkoxide. Examples of the lithium alkoxide include lithium ethoxide. Examples of the niobium alkoxide include niobium ethoxide. Examples of the solvent include alcohols, such as ethanol. Amounts of the lithium alkoxide and the niobium alkoxide are to be adjusted in accordance with a target composition of the coating layer 103. If necessary, water may be added to the precursor solution. The precursor solution may be acidic or alkaline.

Methods for applying the precursor solution to the surface of the positive electrode active material 100 are not particularly limited. For example, the precursor solution can be applied to the surface of the positive electrode active material 100 in a tumbling fluidized bed granulating-coating machine. The tumbling fluidized bed granulating-coating machine can apply the precursor solution to the surface of the positive electrode active material 100 by spraying the precursor solution onto the positive electrode active material 100 while tumbling and fluidizing the positive electrode active material 100. Accordingly, a precursor coating is formed on the surface of the positive electrode active material 100. Subsequently, the positive electrode active material 100 coated with the precursor coating is heat-treated. The heat treatment causes the gelation of the precursor coating to proceed, which leads to the formation of the coating layer 103.

Examples of the vapor-phase coating methods include pulsed laser deposition (PLD) methods, vacuum vapor deposition methods, sputtering methods, thermal chemical vapor deposition (CVD) methods, and plasma chemical vapor deposition methods. The PLD methods are carried out, for example, as follows. A high-energy pulsed laser (e.g., a KrF excimer laser, wavelength: 248 nm) is applied onto an ion-conducting material used as a target, to cause the sublimed ion-conducting material to be deposited onto the surface of the positive electrode active material 100. In instances where a coating layer 103 of LiNbO₃ is to be formed, the target to be used is densely sintered LiNbO₃.

Note that the method for forming the coating layer 103 is not limited to the methods mentioned above. The coating layer 103 may be formed with any of a variety of methods, such as a spray method, a spray-dry coating method, an electrodeposition method, a dipping method, and a mechanical mixing method that uses a dispersing machine.

### (Second Embodiment)

Fig. 3 is a cross-sectional view illustrating a schematic configuration of a battery according to a second embodiment. A battery 200 includes a positive electrode 201, a separator layer 202, and a negative electrode 203. The separator layer 202 is disposed between the positive electrode 201 and the negative electrode 203. The positive electrode 201 includes at least one of the positive electrode material 10 and the positive electrode material 20, both described in the first embodiment. With this configuration, heat generation in the battery is inhibited, and, consequently, the safety of the battery 200 can be improved.

The positive electrode 201 and the negative electrode 203 may each have a thickness of greater than or equal to 10 µm and less than or equal to 500 µm. When the thicknesses of the positive electrode 201 and the negative electrode 203 are greater than or equal to 10 µm, a sufficient energy density of the battery can be ensured. When the thicknesses of the positive electrode 201 and the negative electrode 203 are less than or equal to 500 µm, a high-power operation of the battery 200 can be achieved.

The separator layer 202 is a layer containing an electrolyte material. The separator layer 202 may include at least one solid electrolyte selected from the group consisting of a sulfide solid electrolyte, an oxide solid electrolyte, a halide solid electrolyte, a polymeric solid electrolyte, and a complex hydride solid electrolyte. Details of the solid electrolytes are as described in the first embodiment.

The separator layer 202 may have a thickness of greater than or equal to 1 µm and less than or equal to 300 µm. When the thickness of the separator layer 202 is greater than or equal to 1 µm, the positive electrode 201 and the negative electrode 203 can be separated from each other more reliably. When the thickness of the separator layer 202 is less than or equal to 300 µm, a high-power operation of the battery 200 can be achieved.

The negative electrode 203 includes a negative electrode active material that is a material having a property of occluding and releasing metal ions (e.g., lithium ions).

Examples of the negative electrode active material include metal materials, carbon materials, oxides, nitrides, tin compounds, and silicon compounds. The metal materials may be elemental metals. The metal materials may be alloys. Examples of the metal materials include lithium metals and lithium alloys. Examples of the carbon materials include natural graphite, coke, partially graphitized carbon, carbon fibers, spherical carbon, artificial graphite, and amorphous carbon. Silicon (Si), tin (Sn), a silicon compound, a tin compound, or the like may be used; these are suitable from the standpoint of a capacity density.

Particles of the negative electrode active material may have a median diameter of greater than or equal to 0.1 µm and less than or equal to 100 µm.

The negative electrode 203 may include one or more additional materials, such as a solid electrolyte. The solid electrolyte may be any of the materials described in the first embodiment.

### EXAMPLES

Details of the present disclosure will now be described with reference to Examples and a Reference Example. Note that electrodes and batteries of the present disclosure are not limited to those described in the Examples below.

### EXAMPLE 1

### [Preparation of First Solid Electrolyte]

In an argon glove box with a dew point of -60°C or less, raw material powders of LiF, TiF₄, and AlF₃ were weighed in a molar ratio of LiF:TiF₄:AlF₃ = 2.5:0.5:0.5. These were ground and mixed in a mortar to form a mixture. The mixture was subjected to a milling process, which was performed in a planetary ball mill under the conditions of 500 rpm and 12 hours. In this manner, a powder of a halide solid electrolyte, which served as the first solid electrolyte in Example 1, was prepared. The halide solid electrolyte of Example 1 had a composition represented by Li_{2.5}Ti_{0.5}Al_{0.5}F₆ (hereinafter denoted as "LTAF").

### [Preparation of Coated Active Material]

In an argon glove box, 5.95 g of lithium ethoxide (manufactured by Koujundo Chemical Laboratory Co., Ltd.) and 36.43 g of niobium pentaethoxide (manufactured by Koujundo Chemical Laboratory Co., Ltd.) were dissolved in 500 mL of super-dehydrated ethanol (manufactured by FUJIFELM Wako Pure Chemical Corporation) to form a coating solution.

A powder of Li(Ni,Co,Al)O₂ (hereinafter denoted as "NCA") was provided to be used as the positive electrode active material. Next, a coating layer made of LiNbO₃ was formed on a surface of the NCA. The process of forming a coating layer of LiNbO₃ on a surface of the NCA was performed with a tumbling fluidized bed granulating-coating machine (FD-MP-01E, manufactured by Powrex Corporation). The amount of the NCA charged was 1 kg, a stirring speed was 400 rpm, and a pumping rate for the coating solution was 6.59 g/minute. The amount of the coating solution to be charged was adjusted such that the thickness of LiNbO₃ could be 10 nm. The amount of the coating solution to be charged was calculated from the specific surface area of the positive electrode active material and a density of the LiNbO₃. The series of steps in the tumbling fluidized bed granulating-coating machine was carried out in a dry atmosphere having a dew point of -30°C or less. After the process of forming a coating layer of LiNbO₃ was completed, the resulting powder was placed into an alumina crucible and heat-treated under the conditions of an air atmosphere, 300°C, and 1 hour. The heat-treated powder was reground in an agate mortar. In this manner, NCA having a coating layer of LiNbO₃ was prepared to be used as a coated active material of Example 1. The coating layer was made of lithium niobate (LiNbO₃). The NCA having a coating layer of LiNbO₃ is hereinafter denoted as "Nb-NCA"

### [Preparation of Second Solid Electrolyte]

In an argon glove box with a dew point of -60°C or less, raw material powders of Li₂S and P₂S₅ were weighed in a molar ratio of Li₂S:P₂S₅ = 75:25. These were ground and mixed in a mortar to form a mixture. Subsequently, the mixture was subjected to a milling process, which was performed in a planetary ball mill (P-7 model, manufactured by Fritsch) under the conditions of 510 rpm and 10 hours. In this manner, a glassy solid electrolyte was prepared. The glassy solid electrolyte was heat-treated in an inert atmosphere under the conditions of 270°C and 2 hours. In this manner, Li₂S-P₂S₅ (hereinafter denoted as "LPS"), which was a glass-ceramic sulfide solid electrolyte and served as the second solid electrolyte in Example 1, was prepared.

### [Preparation of Positive Electrode Material]

In an argon glove box, the coated active material, the first solid electrolyte, and the second solid electrolyte of Example 1 were weighed in a volume ratio of the Nb-NCA to the solid electrolytes of 70:30 and in a volume ratio of the first solid electrolyte (LTAF) to the second solid electrolyte (LPS) of 4.8:95.2. These were mixed in an agate mortar to give a positive electrode material of Example 1. Regarding the volume ratio of the Nb-NCA to the solid electrolytes, the "solid electrolytes" means the total volume of the first solid electrolyte (LTAF) and the second solid electrolyte (LPS).

### EXAMPLE 2

A positive electrode material of Example 2 was prepared in the same manner as in Example 1, except that the volume ratio of LTAF to LPS was changed to 17.6:82.4.

### EXAMPLE 3

A positive electrode material of Example 3 was prepared in the same manner as in Example 1, except that the volume ratio of LTAF to LPS was changed to 41.2:58.8.

### REFERENCE EXAMPLE 1

A positive electrode material of Reference Example 1 was prepared in the same manner as in Example 1, except that the LPS was used alone as the solid electrolyte.

In the positive electrode materials of the Examples and the Reference Example, the ratio V1/Vt, which is a ratio of V1 to Vt expressed in a percentage, was as shown in Table 1; V1 is the volume of the first solid electrolyte (LTAF), and Vt is the total volume of the first solid electrolyte and the second solid electrolyte (LPS).

### [Preparation of Battery]

The positive electrode materials were each weighed such that 14 mg of the Nb-NCA was present therein. In an insulating cylinder, LPS and the positive electrode material were stacked in the order stated. The resulting multilayer body was pressure-molded at a pressure of 720 MPa. Next, lithium metal was placed in contact with the LPS layer, and the resultant was pressure-molded again at a pressure of 40 MPa. In this manner, a multilayer body formed of a positive electrode, a separator layer, and a negative electrode was prepared. Next, a stainless steel current collector was placed on upper and lower sides of the multilayer body. A current collector lead was attached to each of the current collectors. Next, the cylinder was sealed with an insulating ferrule to isolate the interior of the cylinder from the ambient environment. Through these steps, batteries of Examples 1 to 3 and Reference Example 1 were produced. The batteries were each constrained with four bolts from upper and lower sides to apply an interface pressure of 150 MPa to the batteries.

### [Preparation of Thermal Analysis Samples]

The batteries were placed in a constant-temperature chamber at 25°C. The batteries were charged at a constant current of 147 µA, which was a current value corresponding to a 0.05 C rate (20 hour rate), where the C rate was a rate with respect to a theoretical capacity of the batteries, until a voltage of 4.3 V was reached. The batteries were charged at a constant voltage of 4.3 V until a current value of 2.9 µA was reached.

The batteries in a charged state were disassembled in an argon glove box, and only the positive electrode materials were taken out. 2 mg of each of the positive electrode materials was sealed in a stainless steel closed pan. In this manner, thermal analysis samples of Examples 1 to 3 and Reference Example 1 were prepared.

### [Performing of Thermal Analysis]

A thermal analysis was performed on the thermal analysis samples of Examples 1 to 3 and Reference Example 1 under the following conditions.

The thermal analysis was carried out with a differential scanning calorimeter (Q1000, manufactured by TA Instruments). A heating condition was 10°C/minute over a range of 0°C to 400°C. An amount of heat generated per unit mass (J/g) was calculated as follows: a peak integral of the heat flow in a temperature range of 50°C to 330°C in a thermal analysis curve was divided by the mass of the thermal analysis sample. The results are shown in Table 1.

**[Table 1]**

| | LTAF/(LTAF+Nb-NCA) (vol.%) | V1/Vt (LTAF/(LTAF+LPS)) (vol.%) | Amount of heat generated (J/g) |
|---|---|---|---|
| Reference Example 1 | 0 | 0.0 | 618.2 |
| Example 1 | 2 | 4.8 | 504.8 |
| Example 2 | 7 | 17.6 | 483.2 |
| Example 3 | 17 | 41.2 | 376.2 |

### <Discussion>

As shown in Table 1, the higher the volume ratio of the halide solid electrolyte in the positive electrode material, the greater the extent to which heat generation in the battery was inhibited. Presumably, one reason for this is that inhibition of a reaction between the sulfide solid electrolyte and oxygen released from the positive electrode active material resulted in a reduced likelihood of oxidation of the solid electrolyte. Thus, an improvement in the safety of the batteries was indicated.

When the ratio of the volume of the LTAF to the volume of the Nb-NCA was, for example, greater than or equal to 2% and less than or equal to 17%, heat generation in the battery was inhibited. Presumably, one reason for this is that, in the positive electrode material, the ratio of the volume of the first solid electrolyte to the volume of the positive electrode active material that was within a desired range resulted in inhibition of a reaction between a solid electrolyte and oxygen released from the positive electrode active material.

Note that Al may be replaced with at least one selected from the group consisting of metalloid elements and metal elements other than Li or Ti, such as Ca, Mg, Y, and Zr; even in such cases, the halide solid electrolyte has a comparable ionic conductivity, which has been previously confirmed (e.g., in Japanese Patent Application No. 2020-048461, filed by the applicant of the present application). Accordingly, it is possible to use a halide solid electrolyte that contains, instead of Al or together with Al, at least one selected from the group consisting of the mentioned elements. Even in this instance, the charging and discharging of the battery is possible, and the effect of inhibiting an increase in the resistance by inhibiting an oxidation reaction of a sulfide solid electrolyte can be produced.

The oxidation of the sulfide solid electrolyte occurs mainly when contact of the sulfide solid electrolyte with the positive electrode active material causes electrons to be withdrawn from the sulfide solid electrolyte. Accordingly, the technology of the present disclosure can produce the effect of inhibiting the oxidation of a sulfide solid electrolyte even in instances in which an active material other than NCAs is used.

### Industrial Applicability

The technology of the present disclosure is useful, for example, in an all-solid-state lithium secondary battery.

### Reference Signs List

- 10, 20: positive electrode material
- 100: positive electrode active material
- 101: first solid electrolyte
- 102: second solid electrolyte
- 103: coating layer
- 110: coated active material
- 200: battery
- 201: positive electrode
- 202: separator layer
- 203: negative electrode

## Claims

1. A positive electrode material comprising:
a positive electrode active material;
a first solid electrolyte; and
a second solid electrolyte, wherein
the first solid electrolyte contains Li, Ti, M, and X, where M is at least one selected from the group consisting of metalloid elements and metal elements other than Li or Ti, and X is at least one selected from the group consisting of F, Cl, Br, and I, and
a ratio of a volume of the first solid electrolyte to a total volume of the first solid electrolyte and the second solid electrolyte is greater than or equal to 4% and less than or equal to 50%.

2. The positive electrode material according to claim 1, wherein the ratio is greater than or equal to 4.8%.

3. The positive electrode material according to claim 1 or 2, wherein the ratio is less than or equal to 45%.

4. The positive electrode material according to any one of claims 1 to 3, wherein the ratio is less than or equal to 41.2%.

5. The positive electrode material according to any one of claims 1 to 4, wherein the second solid electrolyte contains Li and S.

6. The positive electrode material according to any one of claims 1 to 5, wherein M includes at least one selected from the group consisting of Ca, Mg, Al, Y, and Zr.

7. The positive electrode material according to any one of claims 1 to 6, wherein M includes aluminum.

8. The positive electrode material according to any one of claims 1 to 7, wherein the first solid electrolyte is represented by Formula 1:
Li_{α}Ti_{β}M_{γ}X_{δ} (Formula 1)
where α, β, γ, and δ are each independently a value greater than 0.

9. The positive electrode material according to any one of claims 1 to 8, further comprising a coating layer coating at least a portion of a surface of the positive electrode active material.

10. The positive electrode material according to claim 9, wherein the coating layer contains an oxide solid electrolyte having lithium ion conductivity.

11. The positive electrode material according to claim 9 or 10, wherein the coating layer contains lithium niobate.

12. A positive electrode comprising the positive electrode material according to any one of claims 1 to 11.

13. A battery comprising the positive electrode according to claim 12.
